## Europäisches Patentamt

## European Patent Office

## Office européen des brevets

(19)

(11) Numéro de publication: **0 166 660**
**B1**

(12) **FASCICULE DE BREVET EUROPEEN**

(45) Date de publication du fascicule du brevet: **03.10.90**

(51) Int. Cl.⁵: **B 43 L 13/02,** G 01 D 9/30

(21) Numéro de dépôt: **85401238.2**

(22) Date de dépôt: **21.06.85**

(54) **Dispositif d'écriture pour machine à dessiner.**

(30) Priorité: **22.06.84 FR 8409829**
**29.10.84 FR 8416500**

(43) Date de publication de la demande:
**02.01.86 Bulletin 86/01**

(45) Mention de la délivrance du brevet:
**03.10.90 Bulletin 90/40**

(84) Etats contractants désignés:
**BE CH DE FR GB IT LI SE**

(73) Titulaire: **Océ Graphics France S.A.**
**1, Rue Jean Lemoine B.P. 113**
**F-94003 Créteil Cedex (FR)**

(72) Inventeur: **Ferrari, Alphonse**
**4, rue Emile Blot**
**F-94300 Vincennes (FR)**
Inventeur: **Roche, Michel**
**34, Route Cossée**
**F-77181 Courtry (FR)**
Inventeur: **Dard, Jean-Claude**
**29, rue des Glycines**
**F-93250 Villemomble (FR)**

(74) Mandataire: **Hanneman, Henri W.A.M. et al**
**Océ-Nederland B.V. Patents and Information**
**Postbus 101**
**NL-5900 MA Venlo (NL)**

(56) Documents cités:
DE-A-2 934 273
GB-A-2 082 510
US-A-2 717 820

HEWLETT-PACKARD JOURNAL, vol. 32, no. 11,
novembre 1981, pages 25-32, Amstelveen, NL;
R.D. HASELBY et al.: "Y-axis pen handling
system"

(56) Documents cités:
HEWLETT-PACKARD JOURNAL, vol. 33, no. 12,
décembre 1982, pages 28-33, Amstelveen, NL;

R.M. KEMPLIN et al.: " Graphics plotter
mechanical design for performance and
reliability at low cost"

## Description

La présente invention concerne un dispositif d'écriture pour machine à dessiner et plus particulièrement une tête d'écriture équipée d'un organe d'écriture du type crayon, stylo ou analogue. L'invention se rapporte également à un dispositif d'écriture comprenant une telle tête d'écriture associée à un magasin porteur d'organe d'écriture interchangeables sur commande avec celui de la tête d'écriture.

On connaît des dispositifs d'écriture dans lesquels la tête d'écriture est mobile en translation par rapport à un support d'impression lui-même mobile dans une direction perpendiculaire à celle de déplacement de la tête. Des changements d'organe d'écriture peuvent être réalisés en amenant la tête d'écriture à une extrémité de sa course, au voisinage d'un magasin ou barillet comportant des logements où sont stockés plusieurs organes d'écriture. Des moyens de transfert réalisent automatiquement le transfert d'un organe d'écriture de la tête d'écriture à un logement libre du magasin et, inversement, le transfert d'un organe d'écriture d'un logement du magasin à la tête d'écriture.

La tête d'écriture comprend généralement un support adapté à recevoir un organe d'écriture monté mobile dans une direction longitudinale entre une position de repos (relevée) et une position de travail (abaissée) utilisée pour effectuer le tracé.

L'obtention de tracés rapides et précis au moyen de machines à dessiner demande, d'une part, des mouvements rapides de l'organe d'écriture entre ses positions de repos et de travail et, d'autre part, un guidage parfait de l'organe d'écriture au moins quand il vient en position abaissée.

Il est connu d'utiliser des moyens electromagnétiques pour commander les déplacements de l'organe d'écriture entre ses positions relevée et abaissée. Afin de réduire au minimum la masse à mettre en mouvement au cours de ces deplacements, il a été proposé de réaliser des têtes d'écriture dans lesquelles seul l'organe d'écriture est déplacé. Un dispositif de ce type est décrit dans le brevet U.S. 4.299.031. Dans ce dispositif, le corps de l'organe d'écriture porte une pièce métallique qui coopère avec un aimant permanent et un électro-aiamant pour, respectivement, relever et abaisser l'organe d'écriture. Le corps de l'organe d'écriture est guidé à l'intérieur d'une pièce tubulaire. Il est nécessaire que ce guidage soit réalisé avec un jeu minimum pour amener l'organe d'écriture en position de travail avec la précision souhaitée; mais alors les frottements entre le corps de l'organe d'écriture et la pièce tubulaire peuvent être tels qu'il s'opposent aux mouvements de l'organe d'écriture entre ses positions relevée et abaissée et nuisent donc au bon fonctionnement de la tête.

Dans le but d'assurer un guidage efficace sans recontrer de problèmes de frottements, il est proposé par le brevet DE 3.217.755 de monter l'organe d'écriture sur un chariot dont les roues sont montées par rapport à des tiges de guidage de manière à interdire tout mouvement relatif entre l'organe d'écriture et ces tiges autrement que parallèlement à celles-ci. Le montage proposé est relativement complexe et l'on retrouve le problème posé par le déplacement d'une masse assez importante. De plus, et comme dans le cas précédent, le montage ne se prête pas facilement au changement automatique de l'organe d'écriture.

Dans le brevet GB—A—2.082.510 (les préambules des revendications 1 et 11 sont basés sur ce document), un organe d'écriture ayant une partie magnétique est porté par un support dont un côté est ouvert vers l'extérieur dans une direction latérale. L'organe d'écriture est maintenu en appui latéral sur le support par un aimant fixé au support. Le support est monté mobile verticalement sur la tête de façon que l'organe d'écriture puisse être déplacé, solidairement avec son support, entre une position de repos éloignée du papier et une position de travail rapprochée du papier. La masse déplacée de la position de repos à la position de travail est la somme de celles du support et de l'organe d'écriture.

La présente invention a pour objet de fournir une tête d'écriture de structure très simple autorisant un tracé à la fois rapide et précis.

L'invention a plus particulièrement pour objet de fournir une tête d'écriture dans laquelle la masse à déplacer pour faire passer l'organe d'écriture de sa position de repos à sa position de travail, ou inversement, est minimale, tout en assurant un guidage très précis de l'organe d'écriture lorsqu'il est amené en position de travail.

L'invention a encore pour objet de réaliser une tête d'écriture se prêtant facilement au changement automatique d'organe d'écriture.

La présente invention a aussi pour but de fournir un dispositif d'écriture dans lequel tant la structure de la tête d'écriture et du magasin que les moyens de transfert sont considérablement simplifiés par rapport aux dispositifs existants.

Selon un aspect de l'invention, une tête d'écriture pour machine à dessiner comprend un support adapté à recevoir un organe d'écriture amovible comportant au moins une partie en matériau magnétique; des moyens de guidage disposés sur ledit support pour monter mobile l'organe d'écriture sur ledit support dans une direction longitudinale entre une position de repos éloignée d'un support d'écriture et une position de travail rapprochée du support d'écriture, les moyens de guidage étant ouverts vers l'extérieur dans une direction latérale et adaptés à recevoir, en appui latéral, un côté de l'organe d'écriture de façon que l'organe d'écriture soit séparable du support par une traction exercée dans ladite direction latérale; des moyens commandés sélectivement pour déplacer l'organe d'écriture entre la position de repos et la position de travail; et des moyens de maintien magnétiques portés par ledit support pour appliquer à la partie de l'organe d'écriture une première force d'attraction magnétique suffisante pour maintenir l'organe d'écriture en appui latéral sur lesdits moyens de guidage.

Les moyens de guidage sont réalisés de manière à minimiser les frottements entre l'organe d'écriture et le support dans la direction longitudinale et comprennent comme caractéristique dans la revendication 1 des éléments de roulement tels que des billes ou des galets portés par le support et adaptés à rouler sur l'organe d'écriture pour permettre son déplacement dans la direction longitudinale entre la position de repos et la position d'écriture sous l'action des moyens de déplacement.

Avantageusement, un dispositif amortisseur est interposé entre le support et l'organe d'écriture pour amortir les déplacements de l'organe d'écriture dans la direction longitudinale, notamment pour éviter des rebondissements de la pointe de l'organe d'écriture en position de travail.

Selon un autre aspect de l'invention, un dispositif d'écriture pour machine à dessiner comprend une tête d'écriture du type ci-dessus, un magasin adapté à porter une pluralité d'organes d'écriture et des moyens de transfert à commande sélective pour transférer un organe d'écriture de la tête d'écriture audit magasin et dudit magasin à la tête d'écriture. Le magasin comprend une pluralité de logements latéralement accessibles comportant chacun une partie d'appui contre laquelle peut être amené un organe d'écriture, et des moyens d'attraction magnétique pour appliquer à chacun des organes d'écriture, une deuxième force d'attraction magnétique latérale et maintenir ainsi lesdits organes d'écriture contre lesdites parties d'appui des logements respectifs, caractérisé en ce qu'il comprend une tête d'écriture selon le premier aspect de l'invention et en ce que lesdits moyens de transfert sont adaptés à modifier temporairement l'une au moins des première et deuxième forces d'attraction magnétique de manière que la résultante desdits forces varie entre une valeur positive susceptible d'effectuer un transfert d'organe d'écriture depuis la tête d'écriture vers le magasin et une valeur négative susceptible d'effectuer un transfert d'organe d'écriture depuis le magasin vers la tête d'écriture.

Avantageusement, ladite deuxième force d'attraction magnétique appliquée par lesdits moyens d'attraction du magasin est une force magnétique permanente, tandis que la première force d'attraction magnétique appliquée audit organe d'écriture par ladite tête d'écriture est variable, sous l'action des moyens de transfert, entre une première et une deuxième valeur respectivement inférieure et supérieure à ladite deuxième force d'attraction magnétique.

Pour ce faire, un mode de réalisation préféré de la tête d'écriture comprend un aimant permanent pour fournir cette première valeur de la première force d'attraction et un électro-aimant alimenté par les moyens de transfert pour fournir, en combinaison avec l'aimant permanent, la deuxième valeur de la première force d'attraction. Cet électro-aimant peut être par ailleurs utilisé pour déplacer longitudinalement l'organe d'écriture entre sa position de repos et sa position de travail. Pour fournir la deuxième force d'attraction magnétique, le magasin comprend de préférence un aimant permanent associé à chaque logement.

D'autres particularités et avantages du dispositif d'écriture conforme à l'invention ressortiront à la lecture de la description faite, ci-après, à titre indicatif mais non limitatif, en référence aux dessins annexés sur lesquels:

—la figure 1 est une vue partielle d'une machine à dessiner munie d'un dispositif d'écriture selon l'invention,

—les figures 2A et 2B sont des vues de face en élévation montrant respectivement une tête d'écriture et un magasin d'un dispositif d'écriture selon l'invention,

—la figure 3 est une vue en coupe de la tête d'écriture suivant le plan III—III de la figure 2A,

—la figure 4 est une vue en élévation de côté montrant le montage du magasin de la figure 2B, et

—la figure 5 est une vue en coupe suivant le plan V—V de la figure 4.

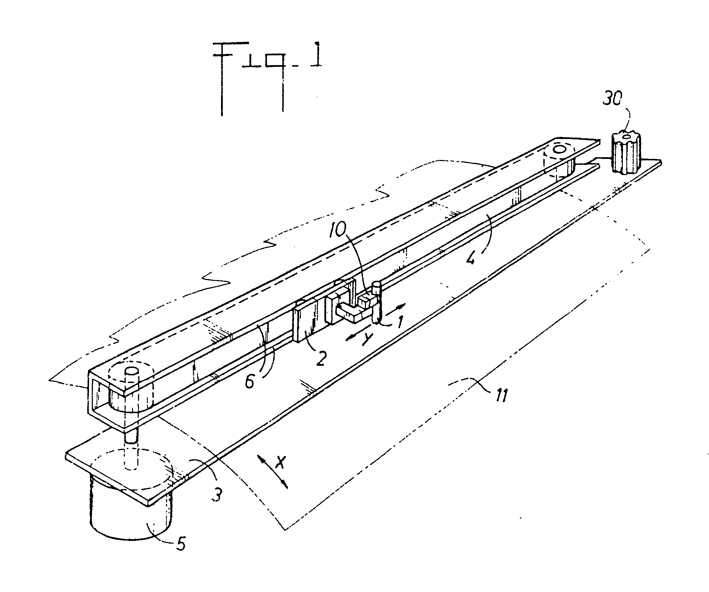

La figure 1 montre très schématiquement une partie d'une machine à dessiner comportant, de façon connue en soi, une tête d'écriture 1 montée sur un chariot 2 et une surface 3 de support et de guidage d'un support de tracé tel qu'une feuille 11.

La feuille 11 est déplacé longitudinalement suivant une direction X par des moyens d'entraînement par picots ou par friction (non représentés). La tête d'écriture est mobile en translation dans une direction horizontale transversale Y perpendiculaire à la direction X. A cet effet, le chariot 2 est solidaire d'un ruban ou chaîne sans fin 4 qui est entraînée par un moteur 5. Pendant son déplacement, le chariot 2 est guidé par une glissière 6.

Un magasin rotatif 30 est monté à une extrémité de la course de la tête d'écriture, afin de pouvoir changer automatiquement l'organe d'écriture porté par la tête.

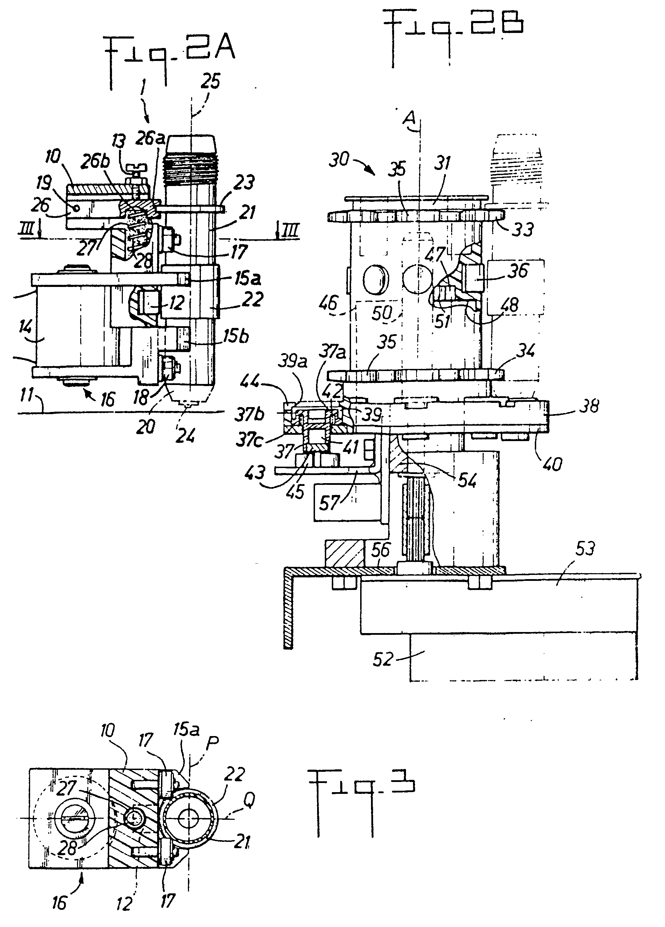

On se référera maintenant aux figures 2A et 3 qui illustrent plus en détail un mode de réalisation d'une tête d'écriture 1 faisant partie d'un dispositif d'écriture conforme à l'invention.

Cette tête 1 comprend un support 10 qui porte un organe d'écriture 20. Ce dernier (crayon, stylo ou analogue), représenté en traits mixtes sur la figure 2B, est monté dans un corps cylindrique 21, l'extrémité de l'organe d'écriture portant la pointe d'écriture 24 faisant saillié à la partie inférieure du corps 21. Le corps 21 est en matériau non magnétique et porte une bague métallique 22 en matériau magnétique. A sa partie supérieure, au-dessus de la bague 22, le corps 21 présente un épaulement annulaire ou collerette 23. L'ensemble formé par l'organe d'écriture 20, le corps 21, la bague 22 et la collerette 23 est symétrique de révolution autour d'un axe 25.

Un électro-aimant 16 comprenant une bobine 14 d'axe parallèle au corps 21 et deux armatures 15a, 15b est fixé au support 10 pour, lorsque la bobine 14 est alimentée, amener l'organe d'écriture en position de travail à l'encontre de la force de rappel exercée par un aimant 12 décrit plus loin. Les parties terminales des armatures 15a, 15b sont conformées pour épouser sensiblement le contour de la bague 22, sur une partie de sa périphérie, d'un même côté d'un plan P passant par l'axe de l'organe d'écriture. Les armatures 15a, 15b sont décalées vers le bas par rapport à la bague 22 pour attirer le corps 21 vers le bas avec une force sensiblement constante. La force d'appui de la pointe 24 de l'organe d'écriture sur la feuille 11 est réglable par déplacement de la bague 22 longitudinalement sur le corps 21 et/ou par ajustement du courant alimentant la bobine 14.

Le corps 21 est guidé sur le support 10 au moyen de deux paires de galets 17, 18 montés libres en rotation sur le support 10 et situés respectivement au-dessus et au-dessous de l'électroaimant. Dans chaque paire, les galets sont situés du côté du plan P où se trouvent les armatures 15a, 15b et sont disposés symétriquement l'un de l'autre par rapport à un plan Q passant par l'axe de l'organe d'écriture et perpendiculaire au plan P (figure 3).

Comme le montre la figure 3, les axes des galets 17, 18 sont parallèles au plan Q et perpendiculaires à l'axe 25 du corps 21, celui-ci étant en contact avec les bords extérieurs légèrement biseautés des galets 17, 18. Les galets 17, 18 guident le corps 21 en translation par rapport au support 10, parallèlement à l'axe 25, entre une position de repos, ou relevée (figure 2A) dans laquelle la pointe 24 surplombe la feuille 11 de quelques mm et une position de travail, ou abaissée, dans laquelle la pointe 24 est en appui sur la feuille 11.

En position de repos, le corps 21 est maintenu en appui contre les galets 17, 18 au moyen d'une force magnétique de maintien latéral exercée sur la bague 22 par l'aimant permanent 12 fixé au support 10 entre les paires de galets 17 et 18. L'aimant 12 est situé au niveau de la bague 22 et exerce une force sensiblement perpendiculaire à l'axe 25.

Une palette 26 est articulée à une extrémité sur le support 10 autour d'un axe 19 perpendiculaire à l'axe 25 et présente à son autre extrémité un évidement 26a dans lequel la collerette 23 du corps 21 s'engage avec un jeu réduit, l'évidement 26a ayant une ouverture évasée.

La palette 26 est sollicitée en permanence vers le haut par un ressort 27 dont une extrémité prend appui sur le support 10 et dont l'autre extrémité est disposée dans un logement 26b formé dans la face inférieure de la palette 26. La position supérieure de la palette 26 est définie par le contact avec une butée ajustable 13 montée sur le support 10, tandis que la position inférieure de la palette 26 est définie par le contact de celle-ci avec une surface de butée du support 10.

Le ressort 27 est un ressort hélicoïdal à l'intérieur duquel est disposé un cylindre 28 de matériau déformable, par exemple un matériau en mousse synthétique.

On notera que le support 10 et les éléments décrits ci-avant solidaires du support 10 sont situés tous d'un même côté du plan de symétrie P du corps 21. Aussi, le corps 21 peut être détaché du support 10 par traction exercée à l'encontre de la composante horizontale de la force exercée par l'aimant 12. Le corps 21 forme avec l'organe d'écriture 20 et la bague 22 un ensemble présentant une symétrie de révolution susceptible d'être accolé dans n'importe quelle position angulaire aux galets 17, 18 dont l'agencement ne présente pas de symétrie de révolution.

On notera encore que le montage décrit permet d'utiliser sans adaptation particulière des organes d'écriture dont les corps ont des diamètres légèrement différents.

Le support 10 de la tête d'écriture s'ouvre latéralement en direction du magasin rotatif 30 qui sera maintenant décrit en détail en référence aux figures 2B, 4 et 5.

Le magasin 30 comprend essentiellement une pièce de support 31, ou barillet, offrant à sa périphérie une pluralité de logements identiques 32 pour des organes d'écriture.

Le barillet comprend un corps cylindrique d'axe vertical A et deux collerettes 33, 34 situées respectivement à la partie supérieure et à la partie inférieure du barillet et présentant à leur périphérie des encoches 35 en forme d'arcs de cercle répartis régulièrement autour de l'axe A. Deux encoches 35 alignées verticalement définissent un logement 32 pour le corps d'un organe d'écriture. Dans l'exemple illustré, les logements 32 sont au nombre de huit répartis régulièrement autour du barillet.

Comme le montre la figure 5, chaque encoche 35 s'étend sur un arc inférieur à 180° de sorte que les logements 32 sont accessibles radialement.

Le corps du barillet 31 porte des aimants permanents 36 en nombre égal à celui des logments 32, chaque aimant étant situé à la périphérie du barillet au voisinage de la partie centrale d'un logement 32 respectif.

Ainsi, un aimant 36 coopère avec la bague métallique 22 du corps d'un organe d'écriture pour maintenir celui-ci dans un logement 32, le corps de l'organe d'écriture étant en appui latéral contre les berceaux formés par les encoches 35 qui définissent ce logement.

La figure 2B montre en tirets un corps d'organe d'écriture porté par le magasin 30. Comme on peut le voir sur cette figure, l'aimant 36 trouve au niveau de la bague 22 tandis que la collerette 23 du corps de l'organe d'écriture est située au-dessus de la collerette supérieure 33 du barillet 31.

A sa partie inférieure, le magasin 30 porte une pluralité de capuchons 37, chacun aligné verticalement avec un logement 32 respectif. Les capuchons 37 sont destinés à protéger les pointes d'écriture des organes d'écriture stockés sur le barillet, et à fermer ces pointes pour éviter le séchage de l'encre.

Comme le montre la figure 2B le barillet est solidaire à sa partie inférieure d'un plateau annulaire 38 muni d'alvéoles 39 alignés avec les axes des logements 32. Chaque alvéole est formé à travers toute l'épaisseur du plateau 38. Une plaque 40 est fixée sous le plateau 38, cette plaque présentant des orifices 41 de diamètre inférieure à ceux des alvéoles 39 et alignés avec ceux-ci.

Chaque capuchon 37, dont l'ouverture est tournée vers le haut, est logé dans un alvéole respectif 39 et a une partie inférieure cylindrique engagée à travers un orifice 41 correspondant. A sa partie supérieure, le capuchon 37 présente un rebord horizontal 37a prolongé vers le bas par une partie verticale 37b elle-même terminée par un épaulement annulaire extérieur 37c. Un ressort 42 est monté dans l'espace annulaire à section en U renversé que délimitent le corps du capuchon et les rebords 37a, 37b. Une pièce métallique 43 est fixée à l'extrémité inférieure du capuchon.

Le capuchon 37 est mobile verticalement dans l'alvéole entre une position inférieure (capuchon ouvert) et une position supérieure (capuchon fermé), en étant guidé par l'épaulement 37c contre la paroi latérale de l'alvéole.

Lorsque le magasin rotatif est amené dans une position angulaire telle qu'un capuchon 37 vient se placer au-dessus d'un aimant 45 non solidaire du magasin en rotation, cet aimant exerce sur la pièce métallique 43 une force d'attraction qui provoque le déplacement du capuchon vers le bas, à l'encontre de la force de rappel exercée par le ressort 42. La position inférieure du capuchon est définie par la venue de l'épaulement 37c en butée contre la plaque 40, autour de l'ouverture 41 (figure 2B).

Lorsque, le magasin ayant tourné, le capuchon 37 n'est plus soumis à l'action de l'aimant 45, ce capuchon est rappelé par le ressort 42 en position de fermeture et vient s'appuyer contre le corps d'un organe d'écriture en place dans le logement 32 correspondant. En cas d'absence d'organe d'écriture, le déplacement vers le haut du capuchon 37 est limité par la venue de l'épaulement 37c en butée contre un rebord intérieur 39a entourant l'ouverture supérieure de l'alvéole 39.

La venue du capuchon 37 en position inférieure autorise l'accès latéral au logement 32 correspondant. Une rainure radiale 44 est formée à la surface supérieure du plateau 38 entre chaque alvéole 39 et le bord extérieur du plateau, afin d'éviter l'endommagement de la pointe d'écriture lorsqu'un organe d'écriture est mis en place sur le magasin ou extrait de celui-ci par déplacement latéral.

A l'exception des aimants 36 et des pièces métalliques 43, l'ensemble des éléments constitutifs du magasin 30 décrits plus haut est en matériau non magnétique, par exemple em matière plastique.

Le corps du barillet 31 présente un passage central 46 permettant le montage du barillet sur une tige rotative verticale 50. La tige 50 porte au voisinage de son extrémité supérieure un doigt ou clavette 51 qui s'engage dans un logement radial correspondant 47 formé à partir d'un épaulement interne 48 du passage 46 (voir figure 2B).

Le doigt 51, d'une part, supporte le barillet 31 sur la tige 50 et, d'autre part, solidarise cette tige et le barillet en rotation.

La tige 50 est entraînée en rotation au moyen d'un moteur 52, par l'intermédiaire d'organes réducteurs logés dans un carter 53. Sur son trajet entres les organes réducteurs et le barillet 31, la tige 50 est guidée dans un palier vertical 54. Ce dernier, ainsi que le moteur 52 et le carter 53 sont fixés sur une platine 56. Sur le palier 54 est fixée une patte 57 supportant l'aimant 45.

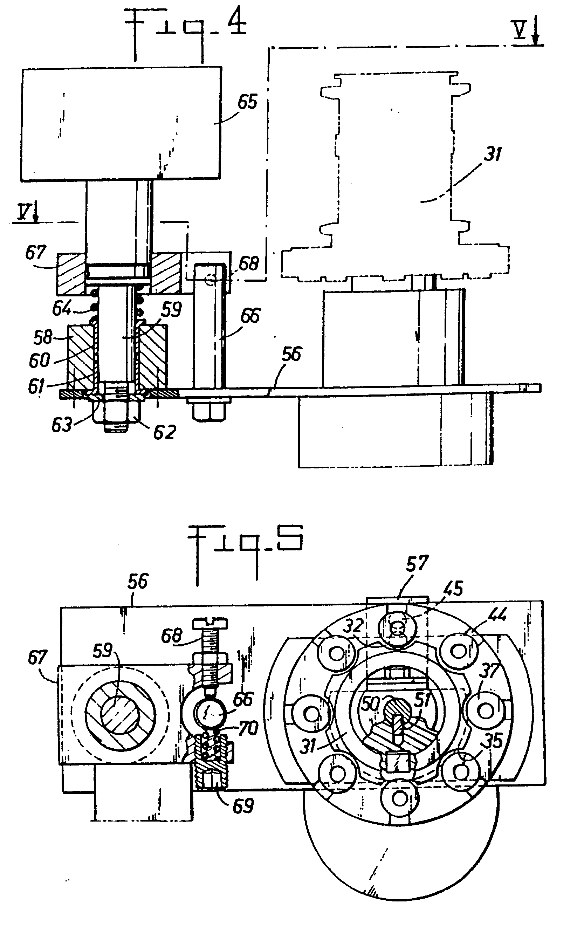

La platine 56 est déplaçable entre deux positions. Dans la présente réalisation, l'axe du barillet reste parallèle à lui-même entre ces deux positions extrêmes. Comme on peut le voir sur les figures 4 et 5. La platine 56 est montée pivotante autour d'un axe verticale décalé par rapport à l'axe du magasin rotatif. A cet effet, la platine 56 est munie d'un palier vertical 58 traversé par un axe fixe 59 avec interposition de bagues 60, 61. L'extrémité inférieure de l'axe 59 traverse la platine 56 etest filetée pour recevoir un écrou 62 qui, par l'intermédiaire d'une rondelle 63, relie à l'axe fixe 59 la platine 56 et tous les éléments qu'elle supporte.

La position en hauteur du magasin 30 est réglée en vissant ou dévissant plus ou moins l'écrou 62. Un ressort 64 est interposé entre le palier 58 et un épaulement de l'axe 59 afin de contribuer au maintien de la platine 56 dans la position choisie. Avantageusement, l'axe 59 est solidaire d'une pièce 65 de la machine portant la glissière de guidage de la tête d'écriture, la pièce 65 constituant de la sorte une même référence pour les positions de la tête d'écriture et du barillet.

Le pivotement de la platine 56 est limité par la venue en contact d'une tige 66 fixée sur la platine avec des butées portées par une pièce 67 fixée sur l'axe 59. La pièce 67 a une extrémité en forme de U entre les branches duquel se trouve la tige 66. Une des branches présente un alésage taraudé dans lequel est vissée une vis 68 dont l'extrémité définit une première butée de position adjustable. L'autre branche, la plus éloignée de la tête d'écriture, présente également un alésage taraudé dans lequel est vissée une vis creuse 69 dont l'extrémité définit une seconde butée de position adjustable. Un ressort 70 est logé dans la vis 69 et exerce sur la tige 66 une force tendant à reppeler celle-ci en permanence contre la butée 68 et, par là-même, à rappeler le barillet 31 dans la direction de la tête d'écriture dans une position où il intercepte la tête d'écriture pour coopérer avec celle-ci au voisinage de l'extrémité de la course de celle-ci.

Le fonctionnement du dispositif d'écriture décrit ci-avant est le suivant.

On considère d'abord uniquement le fonctionnement de la tête d'écriture.

L'organe d'écriture étant en position de repos, il est amené vers la position de travail en faisant passer un courant dans la bobine 14. La composante horizontale de la force électromagnétique exercée par l'électro-aimant 16 s'ajoute à celle de la force exercée par l'aimant 12 pour appliquer le corps 21 contre les galets 17, 18. Ainsi, le corps 21 est parfaitement guidé pendant sa venue en position de travail et est ensuite parfaitement maintenu en place dans cette position pendant les déplacements de l'organe d'écriture.

La venue de l'organe d'écriture en position de travail s'effectue à l'encontre de la force de rappel élastique exercée par le ressort 27. La présence de ce ressort et du bloc de matériau déformable 28 remplissant l'intérieur du ressort permet un amortissement des mouvements oscillatoires verticaux évitant, d'une part, les rebondissements de la pointe d'écriture lorsqu'elle est amenée en position de travail et, d'autre part, un décollement de la pointe d'écriture par rapport à la feuille 11 lorsque la pointe d'écriture recontre des défauts de surface de la feuille 11 au cours du tracé.

A titre indicatif, dans le cas où l'organe d'écriture est déplacé vers la position de travail sans interposition de moyens amortisseurs, il s'écoule environ 10 à 15 ms entre le moment où la pointe de l'organe d'écriture touche la feuille et le moment où cette pointe, après rebondissements, reste en contact permanent entre la feuille. L'interposition de moyens amortisseurs tels que décrits ci-dessus permet de ramener ce délai à 5 ms environ.

Le retour de l'organe d'écriture en position de repos est commandé en interrompant le courant dans la bobine 14, le déplacement étant assuré par la force de rappel élastique exercée par le ressort 27.

Le changement d'organe d'écriture est réalisé automatiquement de la façon suivante.

Le support 10 de l'organe d'écriture s'ouvre latéralement dans la direction du magasin 30 c'est-à-dire qu'il est monté sur le chariot 2 (Fig. 1) de manière telle que le plan Q (Fig. 3) est parallèle à la direction de déplacement de la tête 1 et rencontre le barillet 31 à l'extrémité de la course de celle-ci, les points des armatures 15a et 15b étant orientées de manière à présenter l'organe d'écriture 20 vis à vis du magasin 30 et celui-ci est mobile en rotation de manière à amener l'un quelconque des logements 32 dans une position de transfert faisant face exactement au support 10. Cette position de transfert correspond à l'emplacement de la patte 57 qui porte l'aimant 45.

Pour transférer un organe d'écriture porté par la tête d'écriture à un logement libre 32 situé en position de transfert, la tête d'écriture portant l'organe d'écriture en position de repos est amenée en fin de course du côté du magasin 30. Le capuchon 37 du logement 32 étant en position ouverte (abaissée) sous l'action de l'aimant 45, le logement 32 est librement accessible latéralement pour le corps de l'organe d'écriture porté par la tête. Chaque aimant 36 associé à un logement 32 est choisi de manière à exercer une force d'attraction magnétique supérieure à celle exercée par l'aimant 12 associé à la tête. Aussi, dès que le corps de l'organe d'écriture est parvenue au voisinage de l'aimant 36 du logement 32 en position de transfert, cet aimant provoque l'extraction de l'organe d'écriture de la tête et le plaque sur les berceaux 35.

Le réglage en hauteur du barillet 31 est effectué afin que la collerette 23 du corps de l'organe d'écriture vienne se placer juste au-dessus de la collerette supérieure 33 du barillet.

Par ailleurs, la position de repos de la platine 56 en butée contre la vis 68 est choisie de manière que le corps de l'organe d'écriture porté par la tête vienne en contact du barillet 31, et déplace même la platine 56 à l'encontre du ressort 70, lorsque la tête d'écriture parvient en fin de course. Le montage flottant du barillet permet ainsi de garantir que le corps de l'organe d'écriture porté par la tête en fin de course soit toujours au contact des berceaux 35 du logement 32 en position de transfert, quand bien même la symétrie du barillet en rotation ne serait pas parfaite. Par là-même, l'on garantit que le corps de l'organe d'écriture porté par la tête en fin de course est toujours suffisamment proche de l'aimant 36 pour que la force d'attraction exercée par celui-ci puisse vaincre celle exercée par l'aimant 12. A titre indicatif, les forces exercées par l'aimant 12 sur un organe d'écriture porté par la tête et par un aimant 16 sur un organe d'écriture situé dans le logement 32 correspondant peuvent être respectivement égales à 75 et 150 g.

Pour transférer maintenant un nouvel organe d'écriture sur la tête on procède comme suit.

La tête étant reculée, le barillet 31 est déplacé en rotation jusqu'à amener en position de transfert le logement 32 contenant le nouvel organe d'écriture choisi. On notera que le déplacement du barillet entraîne automatiquement la fermeture du capuchon 37 associé à l'organe d'écriture qui vient d'être extrait de la tête et l'ouverture du capuchon 37 associé au nouvel organe d'écriture choisi.

La tête est à nouveau amenée en position de fin de course, contre le corps du nouvel organe d'écriture, le contact correct entre le support 11 et cet organe d'écriture étant garanti par le montage flottant du barillet. La bobine 14 est alors alimentée. La composante horizontale de la force électromagnétique exercée par l'élctroaimant 16 s'ajoute à la force exercée par l'aimant permanent 12 pour arracher l'organe d'écriture du logement 32 est le plaquer contre les galets 17, 18.

L'abaissement de l'organe d'écriture sous l'action de la composante verticale de la force exercée par l'électroaimant est empêché par le contact de la collerette 23 avec la face supérieure de la collerette 33.

La tête est reculée et l'alimentation de la bobine 14 est coupée avant que la collerette 23 quitte le contact avec la collerette 33 et lorsque l'éloignement de l'organe d'écriture par rapport au barillet est suffisant pour que la force exercée par l'aimant 36 sur le corps de l'organe d'écriture soit inférieure à celle exercée par l'aimant permanent 12. A titre indicatif, cet éloignement peut être choisi égal à environ 2 ou 3 mm, ce qui impose de prévoir un chevauchement au moins égal aux collerettes 23 et 33. Toujours à titre indicatif, la force d'attraction horizontale exercée conjointement par l'aimant 12 et l'électroaimant 16 peut être d'environ 250 g.

En ce qui concerne le fonctionnement de la tête d'écriture, on a envisagé plus haut un rappel essentiellement élastique de l'organe d'écriture vers sa position de repos. Toutefois, ce rappel peut être en variante exercé au moins en partie par une force magnétique. A cet effet, il suffit de placer l'aimant 12 dans une position décalée vers le haut par rapport à la bague 22. La force d'attraction magnétique exercée par l'aimant 12 sur la bague 22 présente alors une composante horizontale faisant fonction de force de maintien latéral et une composante verticale faisant fonction de force de rappel en position de repos.

Toujours à titre de variante, on peut supprimer l'aimant 12 du montage de la figure 1 à condition d'utiliser une bague 22 aimantée. La force de maintien latéral (et éventuellement de rappel en position de repos) est alors constituée par la force d'attraction entre la bague aimantée et les armatures de l'électro-aimant sous la polarité convenable, une remontée rapide de l'organe d'écriture pouvant être commandée en inversant le sens du courant dans la bobine.

En ce qui concerne le changement d'organe d'écriture, on a envisagé plus haut l'utilisation pour le transfert du magasin à la tête d'écriture de la composante horizontale de la force électromagnétique utilisée pour commander la venue de l'organe d'écriture en position de travail. En variante, ce transfert pourra être effectué par établissement d'une force électromagnétique essentiellement horizontale, indépendante des moyens utilisés pour faire passer l'organe d'écriture en position de travail.

D'une façon plus générale, la présente invention vise à recouvrir tous les cas où le maintien de l'organe d'écriture sur la tête ou dans un logement du magasin est assuré par une force magnétique et où le transfert de la tête à un logement du magasin, ou inversement, est assuré par la différence entre les forces magnétiques exercées sur le corps de l'organe d'écriture.

**Revendications**

1. Tête d'écriture (1) pour machine à dessiner, comprenant:

un support (10) adapté à recevoir un organe d'écriture amovible (20) comportant au moins une partie (22) en matériau magnétiue;

des moyens de guidage (17, 18) disposés sur ledit support (10) pour monter mobile l'organe d'écriture (20) sur ledit support dans une direction longitudinale entre une position de repos éloignée d'un support d'écriture (11) et une position de travail rapprochée du support d'écriture, les moyens de guidage étant ouverts vers l'extérieur dans une direction latérale et adaptés à recevoir, en appui latéral, un côté de l'organe d'écriture (20) de façon que l'organe d'écriture soit séparable du support par une traction exercée dans ladite direction latérale;

des moyens commandés sélectivement pour déplacer l'organe d'écriture (20) entre la position de repos et la position de travail; et

des moyens de maintien magnétiques (12) portés par ledit support (10) pour appliquer à la partie (22) de l'organe d'écriture une première force d'attraction magnétique suffisante pour maintenir l'organe d'écriture (20) en appui latéral sur lesdits moyens de guidage;

caractérisée en ce que lesdits moyens de guidage comprennent des éléments de roulement (17, 18) portés par le support (10) et adaptés à rouler sur l'organe d'écriture (20) pour permettre son déplacement dans la direction longitudinale entre la position de repos et la position d'écriture sous l'action des moyens de déplacement.

2. Tête d'écriture selon la revendication 1, caractérisée en ce que l'organe d'écriture (20) est symétrique de révolution autour de ladite direction longitudinale, ledit organe d'écriture étant susceptible d'être accolé dans n'importe quelle position angulaire aux éléments de roulement (17, 18).

3. Tête d'écriture selon l'une quelconque des revendications 1 à 2, dans laquelle ladite partie en matériau magnétique est un élément magnétique (22) fixé à l'organe d'écriture, caractérisée en ce que lesdits moyens de maintien pour appliquer audit organe d'écriture (20) la première force d'attraction magnétique comprennent un aimant permanent (12) fixé sur ledit support (10).

4. Tête d'écriture selon la revendication 3, caractérisée en ce que lesdits moyens de déplacement de l'organe d'écriture entre sa position de repos et sa position de travail comprennent un électro-aimant (16) pour appliquer sélectivement audit élément magnétique (22) une force électromagnétique incluant une composante pour déplacer longitudinalement ledit organe d'écriture et une composante transversale s'ajoutant à ladite première force d'attraction magnétique.

5. Tête d'écriture selon la revendication 4, caractérisée en ce qu'elle comprend de plus des moyens pour régler la force d'appui de l'organe d'écriture en position de travail sur un support d'écriture, les moyens de réglage comprenant des moyens pour ajuster le courant dans la bobine de l'électro-aimant, ou des moyens pour déplacer l'élément métallique (22) sur l'organe d'écriture ou les deux.

6. Tête d'écriture selon l'une quelconque des revendications 1 à 5, caractérisée en ce que lesdits moyens de maintien comprennent des moyens magnétiques de rappel adaptés à appliquer une force de rappel magnétique pour déplacer l'organe d'écriture (10) de la position de travail à la position de repos.

7. Tête d'écriture selon l'une quelconque des revendications 1 à 6, caractérisée en ce que lesdits moyens de déplacement comprennent des moyens de rappel élastiques pour déplacer l'organe d'écriture (20) de sa position de travail à sa position de repos sous l'action, au moins en partie, d'une force de rappel élastique.

8. Tête d'écriture selon l'une quelconque des revendications 1 à 7, caractérisée en ce qu'elle comprend un dispositif amortisseur (27, 28) interposé entre le support (10) et l'organe d'écriture (20), pour amortir les déplacements de l'organe d'écriture dans la direction longitudinale.

9. Tête d'écriture selon la revendication 8, caractérisée en ce que ledit dispositif amortisseur est constitué par un bloc de matériau déformable (28), tel qu'une mousse, logé à l'intérieur d'un ressort hélicoïdal (27) formant les moyens de rappel élastiques de l'organe d'écriture (20) vers sa position de repos.

10. Tête d'écriture selon l'une quelconque des revendications 1 et 2, dans laquelle ledit organe d'écriture comporte une bague aimantée, caractérisée en ce que lesdits moyens de déplacement de l'organe d'écriture comprennent un électro-aimant porté par le support pour appliquer sélectivement une force magnétique sur ladite bague, l'armature de l'électro-aimant coopérant avec ladite bague aimantée pour appliquer ladite première force d'attraction magnétique et maintenir ledit organe d'écriture en appui latéral sur lesdits éléments de roulement.

11. Dispositif d'écriture pour machine à dessiner comprenant une tête d'écriture (1), un magasin (30) adapté à porter une pluralité d'organes d'écriture (20) et des moyens de transfert à commande sélective pour transférer un organe d'écriture (20) de la tête d'écriture (1) audit magasin (30) et dudit magasin à la tête d'écriture (1), ledit magasin (30) comprenant une pluralité de logements (32) latéralement accessibles comportant chacun une partie d'appui (35) contre laquelle peut être amené un organe d'écriture, et des moyens d'attraction magnétique (36) pour appliquer à chacun desdits organes d'écriture, une deuxième force d'attraction magnétique latérale et maintenir ainsi lesdits organes d'écriture contre lesdites parties d'appui des logements respectifs;

caractérisé en ce qu'il comprend une tête d'écriture (1) selon la revendication 1 et en ce que lesdits moyens de transfert sont adaptés à modifier temporairement l'une au moins des première et deuxième forces d'attraction magnétique de manière que la résultante desdites forces varie entre une valeur positive susceptible d'effectuer un transfert d'organe d'écriture depuis la tête d'écriture vers le magasin (30) et une valeur négative susceptible d'effectuer un transfert d'organe d'écriture depuis le magasin vers la tête d'écriture.

12. Dispositif d'écriture selon la revendication 11, caractérisé en ce que ladite deuxième force d'attraction magnétique appliquée par lesdits moyens d'attraction du magasin est une force magnétique permanente, tandis que la première force d'attraction magnétique appliquée audit organe d'écriture sous l'action des moyens de transfert, est variable entre une première et une deuxième valeur respectivement inférieure et supérieure à ladite deuxième force d'attraction magnétique.

13. Dispositif d'écriture selon la revendication 12, caractérisée en ce que lesdits moyens pour appliquer ladite première force d'attraction magnétique comprennent: un aimant permanent (12) disposé sur le support de la tête d'écriture pour fournir ladite première valeur de ladite première force d'attraction; et un électro-aimant (16) disposé sur ledit support et alimenté par lesdits moyens de transfert pour fournir, en combinaison avec ledit aimant permanent (12), ladite deuxième valeur de ladite première force d'attraction transversale.

14. Dispositif d'écriture selon la revendication 13, caractérisé en ce que chaque logement (32) du magasin comporte une surface de butée (33) coopérant avec une collerette (23) d'un organe d'écriture pour s'opposer à un déplacement longitudinal de ce dernier tant que l'organe d'écriture ne s'est pas éloigné de son logement d'une certaine distance.

15. Dispositif d'écriture selon la revendication 13 ou 14, caractérisé en ce que lesdits moyens d'attraction magnétique dudit magasin pour appliquer ladite deuxième force d'attraction magnétique comprennent une pluralité d'aimants permanents (36) respectivement associés à chacun desdits logements (32).

16. Dispositif d'écriture selon l'une des revendications 11 à 15, caractérisé en ce que ledit magasin comprend un corps monté mobile sur ladite machine à dessiner, lesdits logements (32) étant disposés à la périphérie dudit corps et en ce qu'il comprend des moyens de déplacement pour déplacer ledit corps afin d'amener sélectivement l'un desdits logements vis-à-vis desdits moyens de positionnement de la tête d'écriture avant de transférer un organe d'écriture vers ou depuis ledit logement sélectionné.

17. Dispositif d'écriture selon la revendication 16, caractérisé en ce que le corps dudit magasin (30) est monté tournant sur une base (56) disposée à l'une des extrémités de la course de la tête d'écriture et déplaçable entre deux positions extrêmes et des moyens (70) sont prévus pour solliciter ladite base dans celle desdites positions extrêmes la plus proche de la tête d'écriture lors du transfert d'un organe d'écriture entre ledit magasin et ladite tête d'écriture.

18. Dispositif d'écriture selon la revendication 17, caractérisé en ce que le corps dudit magasin comporte au moins deux séries d'encoches (35) en arc de cercle réparties régulièrement, sur la périphérie dudit corps, lesdites encoches constituant les parties d'appui des organes d'écriture dans leurs logements.

19. Dispositif d'écriture selon l'une des revendications 11 à 18, caractérisé en ce que ledit magasin comprend un capuchon (37) associé à chaque logement (32) pour protéger et fermer la pointe d'écriture d'un organe d'écriture monté dans le logement, ledit capuchon étant déplacé d'une position de fermeture à une position d'ouverture sous l'action d'un aimant (45) lorsque le logement associé est placé vis-à-vis de la tête d'écriture, et étant rappelé élastiquement vers la position de fermeture lorsque le logement associé quitte cette position de vis-à-vis.

**Patentansprüche**

1. Schreibkopf (1) für Zeichenmaschine, mit:

einem Träger (10), der angepaßt ist zur Aufnahme eines auswechselbaren Schreiborgans (20), das wenigstens einen Teil (22) aus magnetischem Material aufweist,

an dem Träger (10) angeordneten Führungsmitteln (17, 18) zur Montage des Schreiborgans (20) an dem Träger derart, daß das Schreiborgan in einer Längsrichtung zwischen einer von einer Schreibfläche (11) entfernten Ruhestellung und einer an die Schreibfläche herangerückten Arbeitsstellung beweglich ist, wobei die Führungsmittel in einer seitlichen Richtung nach außen geöffnet und dazu eingerichtet sind, in seitlicher Anlage eine Seite des Schreiborgans (20) derart aufzunehmen, daß das Schreiborgan durch einen in dieser seitlichen Richtung ausgeübten Zug von dem Träger lösbar ist,

selektiv gesteuerten Mitteln zum Verstellen des Schreiborgans (20) zwischen seiner Ruhestellung und seiner Arbeitsstellung und

durch den Träger (10) gehaltenen magnetischen Haltemitteln (12) zum Ausüben einer ersten magnetischen Anziehungskraft, die ausreichend ist, das Schreiborgan (20) in seitlicher Anlage an den Führungsmitteln zu halten, auf den Teil (22) des Schreiborgans,

dadurch gekennzeichnet, daß die Führungsmittel Rollglieder (17, 18) aufweisen, die an dem Träger (10) gehalten sind und an dem Schreiborgan (20) abrollen, um dessen Verstellbewegung in der Längsrichtung zwischen der Ruhestellung und der Schreibstellung unter der Wirkung der Verstellmittel zu ermöglichen.

2. Schreibkopf nach Anspruch 1, dadurch gekennzeichnet, daß das Schreiborgan (20) rotationssymmetrisch in Bezug auf die Längsrichtung ausgebildet ist und von den Rollgliedern (17, 18) in beliebiger Winkelstellung erfaßt werden kann.

3. Schreibkopf nach Anspruch 1 oder 2, bei dem der Teil aus magnetischem Material ein an dem Schreiborgan befestigtes magnetisches Element (22) ist, dadurch gekennzeichnet, daß die Haltemittel zum Ausüben der ersten magnetischen Anziehungskraft auf das Schreiborgan (20) einen an dem Träger (10) befestigten Permanentmagneten (12) aufweisen.

4. Schreibkopf nach Anspruch 3, dadurch gekennzeichnet, daß die Mittel zum Verstellen des Schreiborgans zwischen seiner Ruhestellung und seiner Arbeitsstellung einen Elektromagneten (16) aufweisen, zur selektiven Ausübung einer elektromagnetischen Kraft auf das magnetische Element (22), wobei die elektromagnetische Kraft eine Komponente zur Längsverstellung des Schreiborgans und eine zusätzlich zu der ersten magnetischen Anziehungskraft wirkende Querkomponente aufweist.

5. Schreibkopf nach Anspruch 4, dadurch gekennzeichnet, daß er zusätzlich Mittel zum Regeln der Andruckkraft des Schreiborgans in der Arbeitsstellung auf die Schreibfläche aufweist und daß die Regelmittel eine Einrichtung zum Einstellen des Stromes in der Spule des Elektromagneten und/oder Mittel zum Verstellen des magnetischen Elements (22) an dem Schreiborgan aufweisen.

6. Schreibkopf nach einem der Ansprüche 1 bis 5, dadurch gekennzeichnet, daß die Haltemittel magnetische Rückstellmittel aufweisen, die dazu eingerichtet sind, eine magnetische Rückstellkraft auszuüben, um das Schreiborgan (20) aus der Arbeitsstellung in die Ruhestellung zurückzustellen.

7. Schreibkopf nach einem der Ansprüche 1 bis 6, dadurch gekennzeichnet, daß die Verstellmittel elastische Rückstellmittel aufweisen, um das Schreiborgan (20) zumindest teilweise unter der Wirkung einer elastischen Rückstellkraft aus seiner Arbeitsstellung in seine Ruhestellung zurückzustellen.

8. Schreibkopf nach einem der Ansprüche 1 bis 7, dadurch gekennzeichnet, daß er eine zwischen dem Träger (10) und dem Schreiborgan (20) eingefügte Dämpfungseinrichtung (27, 28) zur Dämpfung der Längs-Verstellbewegungen des Schreiborgans aufweist.

9. Schreibkopf nach Anspruch 8, dadurch gekennzeichnet, daß die Dämpfungseinrichtung durch einen Block (28) aus verformbarem Material, beispielsweise Schaumstoff, gebildet wird, der im Inneren einer Schraubenfeder (27) angeordnet ist, die die Mittel zur elastischen Rückstellung des Schreiborgans (20) in Richtung auf seine Ruhestellung bildet.

10. Schreibkopf nach Anspruch 1 oder 2, bei dem das Schreiborgan einen magnetisierten Ring aufweist, dadurch gekennzeichnet, daß die Verstellmittel für das Schreiborgan einen an dem Träger gehaltenen Elektromagneten zum selektiven Ausüben einer magnetischen Kraft auf den Ring aufweisen, wobei der Anker des Elektromagneten mit dem magnetisierten Ring zusammenwirkt, um die erste magnetische Anziehungskraft auszuüben und das Schreiborgan in seitlicher Anlage an den Rollgliedern zu halten.

11. Schreibvorrichtung für Zeichenmaschine, mit einem Schreibkopf (1), einem Magazin (30) zur Aufnahme mehrerer Schreiborgane (20) und selektiv steuerbaren Transfermitteln zum Übergeben eines Schreiborgans (20) von dem Schreibkopf (1) zu dem Magazin (30) und von dem Magazin zu dem Schreibkopf (1), wobei das Magazin (30) mehrere seitlich zugängliche Aufnahmen (32) mit je einem Anlagebereich (35), gegen den ein Schreiborgan angelegt werden kann, und magnetische Anziehungsmittel (36) aufweist, zum Ausüben einer seitlich wirkenden zweiten magnetischen Anziehungskraft auf jedes der Schreiborgane, so daß die Schreiborgane auf diese Weise an den Anlagebereichen der jeweiligen Aufnahmen gehalten werden,

dadurch gekennzeichnet, daß die Vorrichtung einen Schreibkopf (1) nach Anspruch 1 aufweist und daß die Transfermittel dazu eingerichtet sind, wenigstens eine der ersten und zweiten magnetischen Anziehungskräft zeitweise derart zu modifizieren, daß sich die Resultierende dieser Kräfte zwischen einem positiven Wert, mit dem eine Übergabe von Schreiborganen von dem Schreibkopf zu dem Magazin (30) bewirkt werden kann, und einem negativen Wert ändert, mit dem eine Übergabe von Schreiborganen von dem Magazin zu dem Schreibkopf bewirkt werden kann.

12. Schreibvorrichtung nach Anspruch 11, dadurch gekennzeichnet, daß die zweite magnetische Anziehungskraft, die von den magnetischen Anziehungsmitteln des Magazins ausgeübt wird, eine permanente magnetische Kraft ist, während die erste magnetische Anziehungskraft, die unter der Wirkung der Transfermittel auf das Schreiborgan ausgeübt wird, zwischen einem ersten und einem zweiten Wert variabel ist, beziehungsweise kleiner und grösser als die zweite magnetische Anziehungskraft.

13. Schreibvorrichtung nach Anspruch 12, dadurch gekennzeichnet, daß die Mittel zur Ausübung der ersten magnetischen Anziehungskraft aufweisen: einen an den Träger des Schreibkopfes angebrachten Permanentmagneten (12) zur Erzeugung des ersten Wertes der ersten Anziehungskraft und einen Elektromagneten (16), der an dem Träger angebracht ist und durch die Transfermittel erregt wird, um in Kombination mit dem Permanentmagneten (12) den zweiten Wert der quergerichteten ersten Anziehungskraft zu erzeugen.

14. Schreibvorrichtung nach Anspruch 13, dadurch gekennzeichnet, daß jede Aufnahme (32) des Magazins eine Stützfläche (33) aufweist, die mit einem Flansch (23) eines Schreiborgans zusammenwirkt, um eine Verlagerung des letzteren in Längsrichtung zu verhindern, solange das Schreiborgan nicht eine bestimmte Strecke von seiner Aufnahme entfernt ist.

15. Schreibvorrichtung nach Anspruch 13 oder 14, dadurch gekennzeichnet, daß die zur Ausübung der zweiten magnetischen Anziehungskraft dienenden magnetischen Anziehungsmittel des Magazins mehrere Permanentmagnete (36) umfassen, die jeweils den Aufnahmen (32) zugeordnet sind.

16. Schreibvorrichtung nach einem der Ansprüche 11 bis 15, dadurch gekennzeichnet, daß das Magazin einen beweglich auf der Zeichenmaschine montierten Körper aufweist, daß die Aufnahmen (32) am Umfang des Körpers angeordnet sind und daß Stellmittel zum Bewegen des Körpers vorhanden sind, um selektiv eine der Aufnahmen in eine den Positioniermitteln des Schreibkopfes gegenüberliegende Position zu bringen, bevor ein Schreiborgan aus der ausgewählten Aufnahme oder in diese übergeben wird.

17. Schreibvorrichtung nach Anspruch 16, dadurch gekennzeichnet, daß der Körper des Magazins (30) drehbar auf einem Sockel (56) montiert ist, der an einem Ende der Bahn des Schreibkopfes angeordnet und zwischen zwei Endstellungen verstellbar ist, und daß Mittel (70) vorgesehen sind, die den Sockel in diejenige der Endstellungen vorspannen, die dem Schreibkopf bei der Übergabe eines Schreiborgans zwischen dem Magazin und dem Schreibkopf am nächsten liegt.

18. Schreibvorrichtung nach Anspruch 17, dadurch gekennzeichnet, daß der Körper des Magazins wenigstens zwei Serien kreisbogenförmiger Ausnehmungen (35) aufweist, die regelmäßig auf dem Umfang des Körpers verteilt sind und die Anlagebereiche für die Schreiborgane in den Aufnahmen bilden.

19. Schreibvorrichtung nach einem der Ansprüche 11 bis 18, dadurch gekennzeichnet, daß das Magazin zu jeder Ausnehmung (32) eine Kappe (37) zum Schützen und Abdecken der Spitze des in der Aufnahme untergebrachten Schreiborgans aufweist und daß die Kappe durch die Wirkung eines Magneten (45) aus einer Schließstellung in eine Öffnungsstellung verlagert wird, wenn die zugehörige Aufnahme dem Schreibkopf gegenüberliegt, und elastisch in die Schließstellung zurückbewegt wird, wenn die zugehörige Aufnahme diese Gegenüberstellungsposition verläßt.

## Claims

1. A drawing machine write head (1) comprising:

a support (10) adapted to receive a detachable writing member (20) comprising at least one part (22) made of magnetic material;

guiding means (17, 18) disposed on the support (10) in order to mount the writing member (20) so as to be movable on the support in a longitudinal direction between a rest position remote from a writing medium (11) and a work position near the writing medium, the guiding means being open towards the exterior in a lateral direction and adapted to receive and bear laterally against a side of the writing member (20) so that the writing member can be separated from the support by a pull exerted in the lateral direction;

selectively controlled means for moving the writing member (20) between the rest and the work position; and

magnetic securing means (12) carried by the support (10), for subjecting the part (22) of the writing member to a first force of magnetic attraction sufficient to keep the writing member (20) pressed against the side of the guiding means;

characterised in that the guiding means comprise rolling components (17, 18) carried by the support (10) and adapted to roll on the writing member (20) to enable it to move in the longitudinal direction between the rest position and the writing position under the action of the moving means.

2. A write head according to claim 1, characterised in that the writing member (20) is rotationally symmetrical around the said longitudinal direction, the writing member being adapted to be coupled in any angular position to the rolling components (17, 18).

3. A write head according to claim 1 or 2, in which the part made of magnetic material is a magnetic element (22) secured to the writing member characterised in that the securing means for subjecting the writing member (20) to the first force of magnetic attraction comprise a permanent magnet (12) secured to the said support (10).

4. A write head according to claim 3, characterised in that the means for moving the writing member between the rest position and the work position comprise an electromagnet (16) for selectively applying to the magnetic element (22) an electromagnetic force including a component for moving the writing member longitudinally and a transverse component added to the first force of magnetic attraction.

5. A write head according to claim 4, characterised in that it also comprises means for adjusting the force with which the writing member bears on a writing medium when in the work position, the adjusting means comprising means for adjusting the current in the electromagnet winding or means for moving the magnetic element (22) on the writing member, or both.

6. A write head according to any of claims 1 to 5, characterised in that the securing means comprise magnetic return means adapted to apply a magnetic return force in order to move the writing member (20) from the work position to the rest position.

7. A write head according to any of claims 1 to 6, characterised in that the moving means comprise resilient return means for moving the writing member (20) from the work position to the rest position under the action, at least partly, of a resilient return force.

8. A write head according to any of claims 1 to 7, characterised in that it comprises a damping means (27, 28) interposed between the support (10) and the writing member (20), to damp the movements of the writing member in the longitudinal direction.

9. A write head according to claim 8, characterised in that the damping means comprises a block (28) of deformable material such as a foam, disposed in a helical spring (27) forming the means for resiliently returning the writing member (20) towards the rest position.

10. A write head according to claim 1 or 2, in which the writing member comprises a magnetized ring, characterised in that the means for moving the writing member comprise an electromagnet carried by the support and adapted selectively to exert a magnetic force on the ring, the armature of the electromagnet co-operating with the magnetized ring in order to apply the first force of magnetic attraction and keep the writing member agianst the side of the rolling components.

11. A writing device for a drawing machine, comprising a write head (1), a magazine (30) adapted to carry a number of writing members (20), and selectively-controlled transfer means for transferring a writing member (20) from the write head (1) to the magazine (30) and from the magazine to the write head (1), the magazine (30) being formed with a number of laterally accessible housings (32) each having a bearing part (35) against which a writing member can be brought, and magnetic attraction means (36) for exerting a second, lateral, force of magnetic attraction on each writing member and thus holding the writing member against the bearing parts of the respective housings;

the device being characterised in that it comprises a write head (1) according to claim 1 and in that the transfer means are adapted temporarily to modify at least one out of the first and second forces of magnetic attraction so that the resultant of the said forces varies between a positive value capable of transferring the writing member from the write head to the magazine (30) and a negative value capable of transferring the writing member from the magazine to the write head.

12. A writing device according to claim 11, characterised in that the second force of magnetic attraction exerted by the magazine attraction means is a permanent magnetic force whereas the first force of magnetic attraction, which is applied to the writing member by action of the transfer means, is variable between a first value below and a second value above the second force of magnetic attraction.

13. A writing device according to claim 12, characterised in that the means for exerting the first force of magnetic attraction comprise: a permanent magnet (12) disposed on the support of the write head in order to supply the first value of the first force of attraction, and an electromagnet (16) disposed on the support and supplied by the transfer means in order, in combination with the permanent magnet (12), to supply the transverse second value of the first force of attraction.

14. A writing device according to claim 13, characterised in that each housing (32) in the magazine has an abutment surface (33) cooperating with a collar (23) of a writing member in order to oppose longitudinal movement thereof until the writing member has moved a certain distance away from its housing.

15. A writing device according to claim 13 or 14, characterised in that the magnetic attraction means of the magazine for applying the second force of magnetic attraction comprise a number of permanent magnets (36) respectively associated with each housing (32).

16. A writing device according to any of claims 11 to 15, characterised in that the magazine has a body mounted so as to be movable on the drawing machine, the housings (32) being disposed at the periphery of the body, and in that the device comprises moving means for moving the body in order selectively to bring one of the housings opposite the write head positioning means before transferring a writing member to or from the selected housing.

17. A writing device according to claim 16, characterised in that the body of the magazine (30) is rotatably mounted on a base (56) disposed at one end of the stroke of the write head and movable between two end positions, and means (70) are adapted to urge the base into that one of the end positions which is nearer the write head when a writing member is transferred between the magazine and the write head.

18. A writing device according to claim 17, characterised in that the body of the magazine is formed with at least two sets of notches (35) in an arc of a circle and regularly distributed on the periphery of the body, the notches constituting the parts where the writing members bear against their housings.

19. A writing device according to any of claims 11 to 18, characterised in that the magazine has a cap (37) associated with each housing (32) in order to protect and close the writing tip of writing member mounted in the housing, the cap being moved from a closed position to an open position by action of a magnet (45) when the associated housing is located opposite the write head, and being resiliently returned to the closed position when the associated housing leaves the said opposite position.

Fig. 1

Fig-2A

Fig-2B

Fig-3

Fig.4

Fig.5

3